Europäisches Patentamt

European Patent Office

Office européen des brevets

(11) Veröffentlichungsnummer: **0 487 843 A1**

# (12) EUROPÄISCHE PATENTANMELDUNG

(21) Anmeldenummer: **91114983.9**

(51) Int. Cl.5: **B60J 7/22**

(22) Anmeldetag: **05.09.91**

(30) Priorität: **27.11.90 DE 4037704**

(43) Veröffentlichungstag der Anmeldung:
**03.06.92 Patentblatt 92/23**

(84) Benannte Vertragsstaaten:
**ES FR GB IT**

(71) Anmelder: **MERCEDES BENZ AG**
**Mercedesstrasse 136**
**W-7000 Stuttgart 60(DE)**

(72) Erfinder: **Götz, Hans, Dipl.-Ing.**
**Dahlienstrasse 35**
**W-7030 Böblingen 4(DE)**
Erfinder: **Baumann, Karl-Heinz, Dipl.-Ing.**
**Brühlstrasse 3**
**W-7048 Bondorf(DE)**

(54) **Cabriolet mit einem hinter einer Sitzreihe angeordneten Windschutz.**

(57) Ein Cabriolet mit einem hinter einer Sitzreihe (3) angeordneten Windschutz (2), der sich in Wirkstellung etwa senkrecht zwischen zwei verstellbaren Seitenscheiben (4,5), die in der Höhe auf einer zum Fahrzeuginneren gekrümmten Bahn verschiebbar sind, nach oben erstreckt, und der in eine Nichtgebrauchsstellung in Richtung auf den Fahrzeugboden absenkbar ist, ist dadurch gekennzeichnet, daß die Seitenscheiben (4,5) hilfskraftbetätigt verstellbar sind, und daß zumindest an einer der Seitenscheiben (4,5) ein zwischen seitenscheibe (4 bzw. 5) und Windschutz (2) wirkender Mitnehmer (8) angeordnet ist, mittels dessen die Lage des Windschutzes (2) entsprechend der Verschiebung der Seitenscheibe (4 bzw. 5) veränderbar ist, wobei durch den Mitnehmer (8) der Querweg der Seitenscheibe (4 bzw. 5) gegenüber dem Windschutz (2) ausgleichbar ist.

Fig. 1

Die Erfindung betrifft ein Cabriolet mit einem hinter einer Sitzreihe angeordneten Windschutz gemäß dem Oberbegriff des Patentanspruchs 1.

Aus dem DE-GM 88 05 994 ist bereits ein offener Kraftwagen bekannt, der eine Vorrichtung aufweist, die Luftströmungen im Vordersitzbereich verringern soll. Dazu ist hinter den Vordersitzen eine den Innenquerschnitt des Fahrzeugs ausfüllende Abtrennung vorgesehen. Dieser Windschutz ist als Rollo ausgebildet, welches aus einer am Fahrzeugboden abgesenkten Nichtgebrauchsstellung in eine Wirkstellung nach oben ausgezogen werden kann. Der Windschutz wird in seiner Endlage an einer Querstange eines Überrollbügels eingehängt oder auch an der Hinterseite der Vordersitze oder an hinteren, in Fahrzeugquerrichtung auf einer gekrümmten Bahn in der Höhe verstellbaren, Seitenscheiben eingehängt.

Dieser Windschutz muß von Hand in seine Endlage gebracht und arretiert werden. Sollten dem Fahrer des Kraftwagens während der Fahrt die Luftströmungen zu unangenehm werden, so muß er den Kraftwagen erst anhalten, da die Festlegung des Windschutzes während der Fahrt zuviel Aufmerksamkeit verlangt. Die Endlage des Windschutzes in seiner Wirkstellung ist festgelegt und wird aus optischen Gründen an die Höhe des Überrollbügels oder der Vordersitze angepaßt.

Der Erfindung liegt die Aufgabe zugrunde, einen hinter einer Sitzreihe eines Cabriolets angeordneten Windschutz unter Verwendung eines im Fahrzeug vorhandenen Stellantriebs hilfskraftbetätigt und individuell in der Höhe verstellbar zu machen.

Die Aufgabe wird durch die kennzeichnenden Merkmale des Anspruchs 1 gelöst.

Ein Mitnehmer an den hinteren, hilfskraftbetätigt bewegbaren Seitenscheiben bewirkt, daß der Windschutz entsprechend der Bewegung zumindest einer Seitenscheibe mitverschoben wird. Dadurch kann jede Person, die Zugang zu den Bedienschaltern der Seitenscheiben hat, auf die gewünschte Wirkstellung des Windschutzes einwirken. Da diese Bedienschalter normalerweise auch für den Fahrer des Fahrzeugs auf einer Mittelkonsole einfach zu erreichen sind, ist der Windschutz ohne Ablenkung des Fahrers auch während der Fahrt problemlos in seine Wirkstellung hochzufahren. Ein zusätzlicher Antrieb ist durch die Nutzung der angetriebenen Seitenscheiben eingespart. Sollten die Luftströmungen den Fahrzeuginsassen auch bei geöffneten Seitenscheiben nicht unangenehm sein, so ist gleichzeitig zur optischen Verschönerung des Cabriolets der Windschutz abgesenkt.

Der notwendige Mitnehmer an der Seitenscheibe, der den gekrümmten Weg der Scheibe gegenüber dem Windschutz ausgleichen muß, kann durch ein elastisches Band, ein Teleskoprohr, oder ähnliches gebildet werden. Dabei ist der Mitnehmer vom oberen Ende des Windschutzrollos fest umschlungen, oder aber der Mitnehmer liegt an einem stabilen Windschutzrahmen an, den er mit sich bewegt. Für einen Windschutzrahmen kommt auch ein von der Seitenscheibe abkragender Mitnehmer in Frage, der am Windschutzrahmen während der Bewegung der Scheibe angreift.

Wenn der Mitnehmer von den Seitenscheiben abnehmbar ist, kann der Windschutz auf Wunsch auch nicht mit den Seitenscheiben bewegt werden, oder ist überhaupt nur bei Bedarf zwischen den Seitenscheiben an seinen vorgesehenen Platz einzusetzen. Für die lösbare Festlegung des Mitnehmers gibt es zahlreiche, allgemein bekannte Möglichkeiten.

Bereits bekannt sind Windschutzausbildungen als Rollo oder als schwenkbarer Windschutzrahmen. Bei beiden Ausbildungsmöglichkeiten sind die genannten Mitnehmer anwendbar. Beginnt die untere Kante des Windschutzes erst auf Höhe der Bordkante des Fahrzeugs, so bleibt für die dahintersitzenden Fahrzeuginsassen ausreichend Fußraum erhalten.

Die Gegenstände weiterer Ansprüche bilden vorteilhafte Ausgestaltungsmöglichceitender Gegenstände vorherstehender Ansprüche.

Drei Ausführungsbeispiele der Erfindung sind in der Zeichnung dargestellt.

Es zeigen:

Fig. 1:    einen Fondbereich eines Cabriolets mit einem Rollo als Windschutz, in durch die Seitenscheiben mittels eines elastischen Bandes hochgezogener Wirkstellung,

Fig. 2:    in Ansicht ein Rollo, das durch eine Teleskostange an den Seitenscheiben festgelegt ist, und

Fig. 3:    einen Windschutz mit einem Rahmen, der durch einen von einer Seitenscheibe abkragenden Mitnehmer hochgeklappt wird.

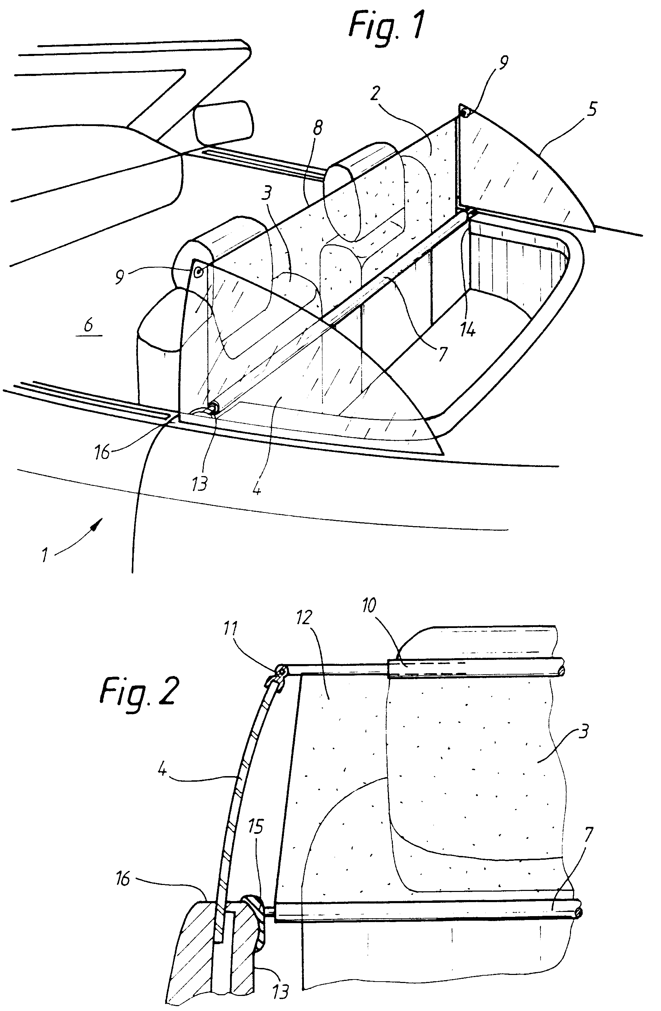

In Fig. 1 ist ein Fondbereich eines Cabriolets 1 dargestellt, in dem ein Windschutz 2 hinter einer vorderen Sitzreihe 3 angeordnet ist. Dieser Windschutz 3 ist in seiner Wirkstellung gezeichnet, in der er sich etwa senkrecht zwischen zwei Seitenscheiben 4,5 nach oben erstreckt und dabei den davorliegenden Fahrzeuginnenraum 6 vor Luftverwirbelungen schützt. Bei Nichtgebrauch kann der Windschutz 3, der als Rollo ausgebildet ist, in Richtung auf einen Fahrzeugboden nach unten abgesenkt werden, wobei sich das Rollo auf einer Aufwickelrolle 7 selbsttätig, federunterstützt aufwickelt. Die Seitenscheiben 4,5 sind hilfskraftbetätigt durch einen nicht dargestellten Antrieb in der Höhe verstellbar und ziehen dabei den Windschutz 3 durch einen Mitnehmer 8 mit. Der Mitnehmer 8 ist durch ein elastisches Band gebildet, das an einem oberen Ende jeder Seitenscheibe 4,5 über einen Haftsauger 9 lösbar befestigt ist, und um das das obere Ende des Windschutzes 3 festgelegt ist. Dieser Mitnehmer 8 kann den bei der Verschiebung der Seitenscheiben 4,5 auf einer gekrümmten Bahn auftretenden Querweg der Seitenscheiben 4,5 durch seine Elastizität ausgleichen.

Fig. 2 zeigt demgegenüber einen anderen Mitnehmer 10, der durch ein Teleskoprohr gebildet ist. Der Mitnehmer 10 wird mittels zweier Haltegelenke 11 zwischen den beiden Seitenscheiben 4,5 eingesetzt, und um diesen ist wiederum das obere Ende eines rolloartigen Windschutzes 12 festgelegt. Die Haltegelenke 11 sind lösbar auf die Seitenscheiben 4,5 aufgesteckt. Die Aufwickelrolle 7 ist ebenfalls lösbar zwischen den seitlichen Aufbauwänden 13,14, federbelastet in Richtung der Aufbauwände, über jeweils ein Klemmstück 15 festgelegt. Somit kann der Windschutz 12 ohne großen Aufwand aus dem Fahrzeug entfernt werden. Die federunterstützte Aufwickelrolle 7 ist etwa auf Höhe der Bordkante 16 des Cabriolets 1 angeordnet, wodurch die Beinfreiheit einer hinter dem Windschutz sitzenden Person nicht eingeschränkt wird. Bei der Bewegung der Seitenscheiben 4,5 wird der Windschutz 12 mitbewegt und der Querweg der Seitenscheiben 4,5 durch die gegeneinander verschiebbaren Mantelrohre des Teleskoprohrs ohne Widerstand ausgeglichen. Es bietet sich dazu an, daß die beiden Seitenscheiben 4,5 gleichzeitig angesteuert und synchron miteinander bewegt werden, so daß das obere Ende des Windschutzes 12 etwa waagrecht verfahren wird.

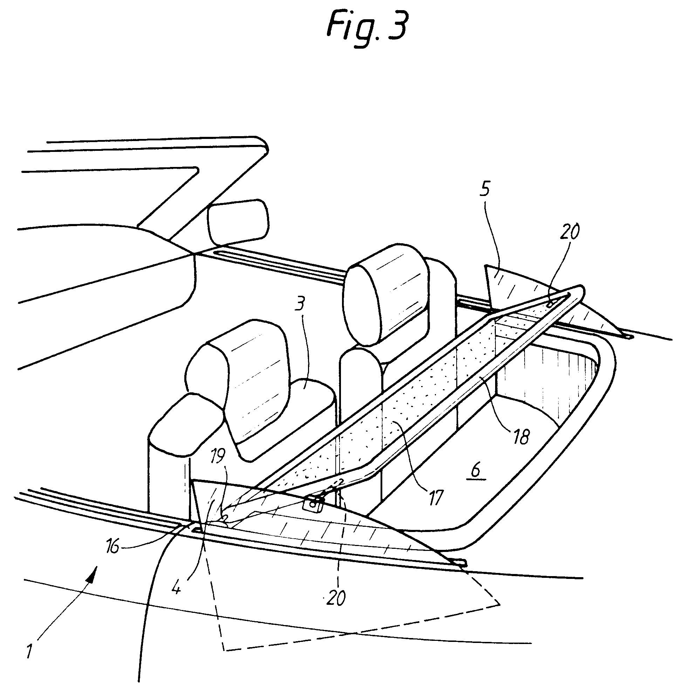

In Fig. 3 ist ein weiteres Ausführungsbeispiel eines Windschutzes 17 dargestellt, der mit einem festen Windschutzrahmen 18 ausgebildet ist, welcher um eine Schwenkachse 19 hoch- und nach hinten waagrecht herunterklappbar ist. Die Schwenkachse 19 befindet sich wiederum etwa auf Höhe der Bordkante 16 des Cabriolets 1. An den Seitenscheiben 4,5 ist ein davon in Richtung des Fahrzeuginnenraums 6 abkragender, bolzenförmiger Mitnehmer 20 festgelegt, der hier mittels einer U-förmigen Aufnahme auf die Seitenscheiben 4,5 aufgesteckt ist. Der Mitnehmer 20 untergreift den Windschutzrahmen 18 und nimmt diesen bei der Bewegung der Seitenscheiben 4,5 mit, bzw. stützt diesen bei der Absenkung des Windschutzes 17 ab. Der Windschutzrahmen 18 gleitet bei der Querbewegung der seitenscheiben 4,5 entlang der bolzenförmigen Mitnehmer 20. Hierbei wäre auch nur ein Mitnehmer 20 an einer Seitenscheibe 4 bzw. 5 ausreichend.

**Patentansprüche**

1. Cabriolet mit einem hinter einer Sitzreihe angeordneten Windschutz, der sich in Wirkstellung etwa senkrecht zwischen zwei verstellbaren Seitenscheiben, die in der Höhe auf einer zum Fahrzeuginneren gekrümmten Bahn verschiebbar sind, nach oben erstreckt, und der in eine Nichtgebrauchsstellung in Richtung auf den Fahrzeugboden absenkbar ist,
**dadurch gekennzeichnet,**
daß die Seitenscheiben (4,5) hilfskraftbetätigt verstellbar sind, und daß zumindest an einer der Seitenscheiben (4 bzw. 5) ein zwischen Seitenscheibe (4,5) und Windschutz (2,12,17) wirkender Mitnehmer (8,10,20) angeordnet ist, mittels dessen die Lage des Windschutzes (2,12,17) entsprechend der Verschiebung der Seitenscheibe (4,5) veränderbar ist, wobei durch den Mitnehmer (8,10,20) der Querweg der Seitenscheibe (4,5) gegenüber dem Windschutz (2,12,17) ausgleichbar ist.

2. Cabriolet nach Anspruch 1,
**dadurch gekennzeichnet,**
daß die beiden Seitenscheiben (4,5) gleichzeitig angesteuert und synchron bewegbar sind.

3. Cabriolet nach einem der Ansprüche 1 oder 2,
**dadurch gekennzeichnet,**
daß der Mitnehmer (8) durch ein elastisches Band gebildet ist, das an beiden Seitenscheiben (4,5) festgelegt ist und den Windschutz (2) mit sich zieht.

4. Cabriolet nach einem der Ansprüche 1 oder 2,
**dadurch gekennzeichnet,**
daß an beiden Seitenscheiben (4,5) ein Teleskoprohr (10) gelenkig festgelegt ist, das den Windschutz (12) mitbewegt.

5. Cabriolet nach einem der Ansprüche 1,
**dadurch gekennzeichnet,**
daß an mindestens einer Seitenscheibe (4 bzw. 5) ein davon abkragender Mitnehmer (20) festgelegt ist, der an einem Windschutzrahmen (18), diesen mit sich nehmend, anlegbar ist.

6. Cabriolet nach einem der Ansprüche 3 bis 5,
**dadurch gekennzeichnet,**
daß der Mitnehmer (8,10,20) lösbar an den Seitenscheiben (4,5) festgelegt ist.

7. Cabriolet nach Anspruch 4 und 6,
**dadurch gekennzeichnet**,
daß das Teleskoprohr (10) federbeaufschlagt zwischen den Seitenscheiben (4,5) eingespannt ist.

8. Cabriolet nach Anspruch 5,

**dadurch gekennzeichnet,**
daß der Windschutz (17) nach hinten abklappbar ist, und daß sich seine Schwenkachse (19) etwa auf Höhe der Bordkante (16) des Fahrzeugs befindet.

9. Cabriolet nach einem der Ansprüche 3 bis 5,
**dadurch gekennzeichnet,**
daß der Windschutz (2,12) als Rollo ausgebildet ist.

10. Cabriolet nach Anspruch 9,
**dadurch gekennzeichnet,**
daß die Aufwickelrolle (7) des rolloartigen Windschutzes (2,12) etwa auf Höhe der Bordkante (16) angeordnet ist.

# Fig. 1

# Fig. 2

# Fig. 3

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| | **EINSCHLÄGIGE DOKUMENTE** | | EP 91114983.9 |
| D,A | DE - U - 8 805 994 (STOBINSKI) * Fig. 1 * | 1,9 | B 60 J 7/22 |
| A | US - A - 2 573 789 (GALE) * Fig. 1,6 * | 1 | |
| A | DE - C - 3 914 035 (DAIMLER-BENZ AKTIENGESELL-SCHAFT) * Gesamt * | 1,2,8 | |
| | | | **RECHERCHIERTE SACHGEBIETE (Int Cl 5)** |
| | | | B 60 J B 62 D |

Der vorliegende Recherchenbericht wurde für alle Patentansprüche erstellt.

| Recherchenort | Abschlußdatum der Recherche | Prüfer |
|---|---|---|
| WIEN | 19-12-1991 | SCHMICKL |